# EUROPEAN PATENT SPECIFICATION

(11) **EP 0 506 688 B1**
(45) Date of publication and mention of the grant of the patent: **17.03.1999**
(21) Application number: 91900097.6
(22) Date of filing: 03.12.1990
(51) Int. Cl.: H04J 3/24, H04Q 11/04, H04Q 7/00, H04L 29/06

(54) **PACKET HANDLING METHOD**
Verfahren zur Paketvermittlung
METHODE DE MANIPULATION DE PAQUETS

(30) Priority: 04.12.1989 US 445238
(43) Date of publication of application: 07.10.1992
(73) Proprietor: MOTOROLA, INC., Schaumburg, IL 60196 (US)
(72) Inventor: FREEBURG, Thomas, A., Arlington Heights, IL 60004 (US); KACZMARCZYK, John, M., Niles, IL 60648 (US); BUCHHOLZ, Dale, R., Palatine, IL 60067 (US); WHITE, Richard, E., Cary, IL 60013 (US); CHANG, Hungkun, J., Schaumburg, IL 60194 (US); NOLAN, Michael, P., Lake Zurich, IL 60047 (US)
(74) Representative: Dunlop, Hugh Christopher
(86) International application number: US9007055
(87) International publication number: WO9108630

(56) References cited:
- US-A- 4 636 791
- US-A- 4 654 654
- US-A- 4 684 941
- US-A- 4 890 280
- US-A- 4 933 935
- IEEE TRANSACTIONS ON COMMUNICATIONS, vol. 37, no. 6, June 1989, pages 545-553, XP000033027 WOODSIDE C M ET AL: "THE EFFECT OF BUFFERING STRATEGIES ON PROTOCOL EXECUTION PERFORMANCE"

## Description

### Background of the Invention

This invention is generally directed to information systems in which data is transmitted by packets and is more specifically directed to a method for storing and referencing packets.

Packet data networks convey information from an originator to a specified addressee by incorporating the information into packets. Each packet contains a preamble (control data) and information (message data). The preamble typically includes packet network control data, synchronization information, and addressee destination information. The information portion contains part of the total originator's message.

The packet originated by the addressor is typically not directly received by the addressee. The packet may be relayed by several intermediate stations before reaching the final addressee destination. As the transmission speeds of packet networks increase, it becomes increasingly important for relay stations to be able to efficiently handle and process packets.

In a direct method for handling packets, received packets are stored in a memory location. The destination of the packet contained at the preamble is checked as well as other packet network control information. Correct receipt or validation of the control information and the packet data information is checked. Assuming no errors are detected, a new packet corresponding to the received packet is created and stored in a different memory location for transmission. At the appropriate time, the reconstituted packet is retransmitted by the relay station towards its final destination.

Packets are handled in a different manner in an Ethernet local area network. A buffer ring structure comprised of a series of contiguous fixed length byte buffers are utilized for storage of received packets. The beginning and end location of the stored packet is identified by addresses held in a page start and a page stop register. Successive buffers in the ring are utilized to store the packet. Multiple packets can be consecutively stored in the ring structure. The packets are normally removed from the receive buffer ring in FIFO order and are reconstituted for retransmission in memory separate from this ring.

IEEE Transactions on communications, vol. 37, no. 6, June 1989, pages 545-553, C.M. Woodside et al. "The effect of buffering strategies on protocol execution performance" discusses the data communications throughput of a protocol in local area and wide area networks and "buffer cut-through" strategies for avoiding copying of higher level data. In one described arrangement, chains of buffers are described where headers of data units are stored in the same buffer chains as the data or in separate header buffers.

### Objects of the Invention

It is an object of this invention to provide an improved method for organizing and handling packets that minimizes intermediate data transfer to additional memory locations prior to retransmission of the packet. This invention allows packets to be assembled for transmission from information stored in segregated memory locations by providing a hierarchy of addressability. This addressing provides a great level of flexibility in defining or redefining a packet without data duplication in multiple memory locations.

### Brief Description of the Drawings

Figure 1 is a block diagram of an exemplary packet switching system in accordance with the present invention.

Figure 2 is a block diagram of the packet switch as shown in Figure 1.

Figure 3 illustrates a format for information in one time slot in a packet environment.

Figure 4 illustrates the information contained in the packet header as shown in Figure 3.

Figure 5 is a diagram representing the packet addressing method and organization in accordance with the present invention.

Figure 6 illustrates the contents and format for the virtual circuit register as shown in Figure 5.

Figure 7 shows the content and format of the queue control block as shown in Figure 5.

Figure 8 shows the contents and format of a packet descriptor as shown in Figure 5.

Figure 9 shows the contents and format of a buffer descriptor as shown in Figure 5.

### Detailed Description of the Invention

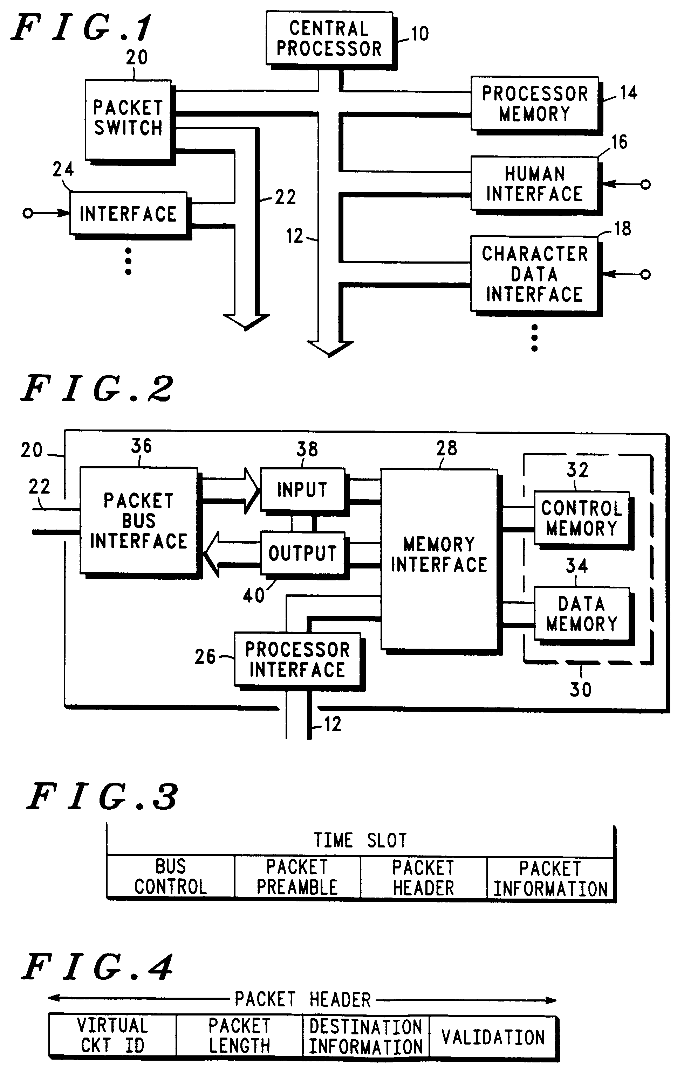

Figure 1 illustrates a packet switching system capable of originating, receiving, and relaying information over a packet network. A central processor 10 is connected by a local communications bus 12 to processor memory 14, human interface apparatus 16, character data interface 18 and packet switch 20. The processor can also be coupled to other types of interfaces by bus 12. The human interface 16 may comprise available peripheral interface devices suited for the specific microprocessor contained in central processor 10 for inputting and outputting information for users. Output information can consist of lights, visual displays and audible alerts. Inputs to the human interface can consist of user operable switches, push buttons, potentiometer controls, and other transducers.

Character data interface 18 may consist of available integrated circuit translators to interface a particular microprocessor by its bus to an RS232 device allowing for data input and output. Additional interfaces can also be utilized to interpret data supplied with other protocols such as Ethernet, a token ring format, and an IBM 3270 format as well as other forms of data communication.

The packet switch 20 is connected to the processor bus 12 and packet bus 22. Interface 24 is coupled to bus 22 and is utilized to provide an input/output interface to a particular communications device or network. A plurality of interfaces suited to coupling different networks or devices to the packet bus can be utilized. For example, interfaces may be utilized to couple the packet bus 22 with a telephone, a T1 circuit, and ISDN circuit as well as other devices and networks. The purpose of packet switch 20 is to receive and transmit packetized data among interfaces on packet bus 22. It also communicates by processor bus 12 with processor 10 and other networks and devices by means of the interfaces coupled to the processor bus 12. The packet switch functions as a traffic policeman.

Figure 2 illustrates a block diagram of an exemplary packet switch 20 which includes elements connected by bidirectional buses. A processor interface 26 couples processor bus 12 with memory interface 28. The memory interface is coupled to random access memory 30 which is partitioned into control memory 32 and data memory 34. The packet bus 22 is coupled by packet bus interface 36, input control function 38, and output control function 40 to memory interface 28.

The packet switch as generally depicted in Figure 2 is merely illustrative of the general organization and functioning of a packet switch and is intended merely to facilitate an understanding of the method according to the present invention. Since various types of packet switches are known in the art, the specific operation and details of the internal functioning of the packet switch will not be explained since the present invention is not limited to particular packet switch. In general, the functions of the packet switch can be accomplished in hardware by a state machine implementation or can be accomplished by primarily a software implementation.

Figure 3 illustrates a typical format for information being sent during one time slot on a packet bus. The format illustrates the transmission of local bus control information, packet preamble information, a packet header, and packet information (message data). The bus control information consists of the address of one of the interfaces coupled to the packet bus. The packet preamble is provided for synchronization purposes. The packet header will be explained in more detail below. The packet information represents the information to be communicated between users.

Figure 4 illustrates information contained within the packet header as shown in Figure 3 in accord with the present invention. The header includes a virtual circuit identification, packet length information, intermediate destination information, and validation information. The virtual circuit identification contains information that specifies a virtual circuit register contained within packet switch 20. Further information on this element is provided with regard to the following figures. The packet length provides information concerning the length of the packet information. The destination information contains the intermediate destination address information. The validation information contains data associated with a CRC data accuracy calculation.

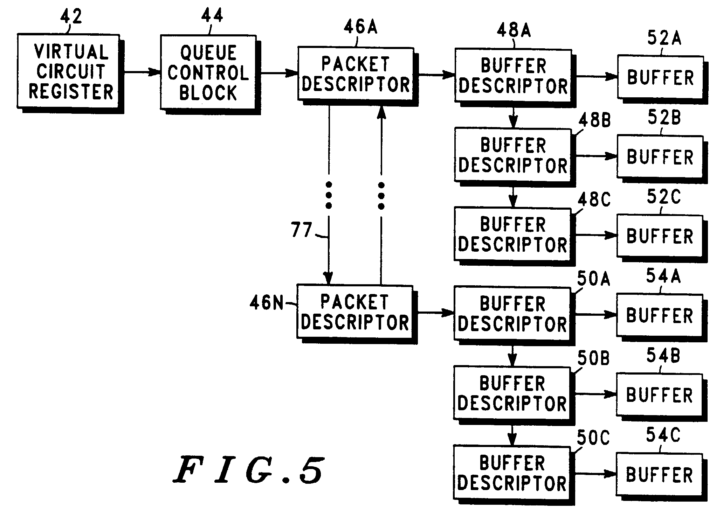

Figure 5 illustrates an exemplary packet handling and organization method according to the present invention. In the illustrative embodiment of the present invention, the packet information as identified in Figure 3 is stored in buffers 52A-52C and 54A-54C. These buffers constitute sections of data memory 34. The control memory 32 provides storage for the commands associated with the other elements shown in Figure 5. These elements facilitate a method for organizing and reorganizing packets according to a hierarchical approach.

Virtual circuit register 42 points to or addresses a queue control block 44. Each queue control block can point to a write packet descriptor or a read packet descriptor. As illustrated, queue control block 44 points to packet descriptor 46A.

Each packet descriptor can point to a write buffer descriptor and a read buffer descriptor. In addition, it can point to one other packet descriptor. As illustrated, packet descriptor 46A points to buffer descriptor 48A and to packet descriptor 46N.

The buffer descriptors each point to one buffer and to a next write buffer descriptor and a next read buffer descriptor. In the illustrative embodiment, buffer descriptor 48A - 48C point respectively to buffers 52A - 52C. Also the buffer descriptor 48A points to buffer descriptor 48B which in turn points to buffer descriptor 48C thereby forming a continuous chain or link. Buffer descriptors 50A - 50C are likewise organized with regard to each other and buffers 54A - 54C.

Before further explaining the functioning of these elements it is believed that an explanation of the benefits of this organization will assist in comprehending the organization and function of each element. An important aspect of this invention is to provide an improved level of flexibility in defining and redefining a packet without requiring substantial data duplication by a microprocessor. This is generally accomplished by providing a hierarchy of addressability wherein received packets are disassembled and stored in segregated memory locations. Packets to be transmitted are assembled by sequentially addressing the segregated memory locations.

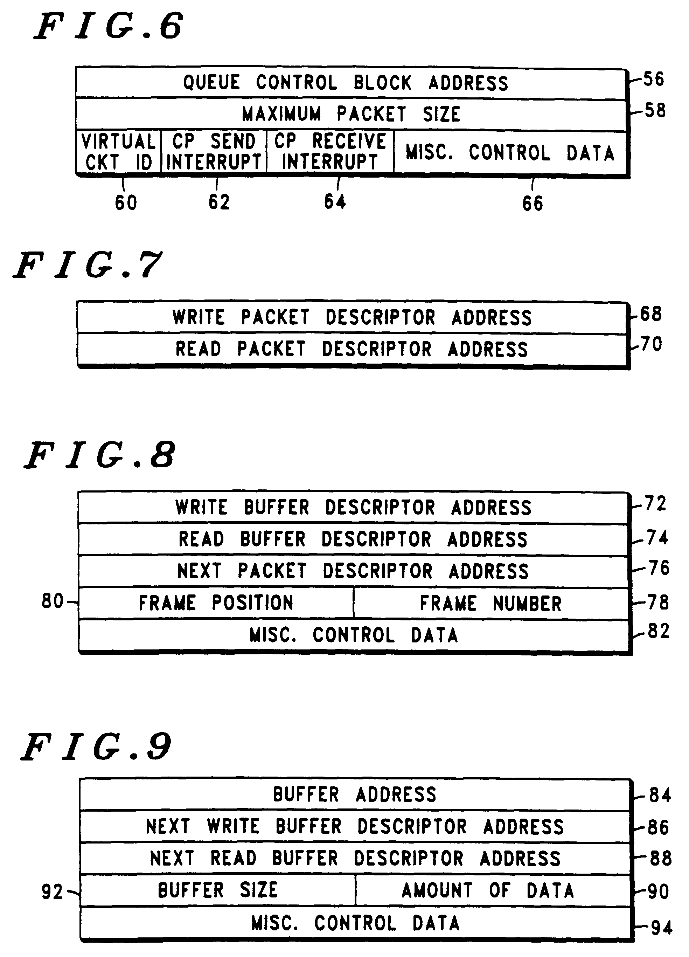

Figure 6 illustrates an exemplary embodiment of the contents of a virtual circuit register 42 which constitutes an ultra-packet-level address. As illustrated, it includes a queue control block address 56, maximum packet size information 58, virtual circuit type identifier 60, a central processor (CP) send interrupt data 62, CP receive interrupt data 64, and miscellaneous control data 66. Address 56 is utilized to point to the queue control block 44. The maximum packet size field identifies the largest packet that can be received for a given virtual circuit register. This can be utilized as a safeguard to keep a packet from over-writing memory. The virtual circuit type data indicates if the particular virtual circuit register is valid as an input or output circuit. The CP send and received interrupt fields determine if a CP interrupt is to be generated and if so, its priority. The miscellaneous control data field can be utilized to accommodate additional control information which may be useful for a specific implementation of a method in accordance with the present invention.

Figure 7 illustrates the fields associated with a queue control block 44 which constitutes a super-packet-level address. The queue control block consists of write and read packet descriptor address 68 and 70, respectively. The write packet descriptor address points to the packet descriptor to be used in writing a received packet. The read packet descriptor address points to the packet descriptor to be used in reading a packet to be transmitted. These addresses are updated as packets are received and transmitted.

Figure 8 illustrates the fields associated with packet descriptors 46 which constitutes a packet-level address. Each packet has one assigned packet descriptor that points to read and write buffer descriptors. The write buffer descriptor address 72 points to the first buffer descriptor to be used for receiving a packet. The read buffer descriptor address 74 points to the first buffer descriptor to be used for sending a packet. The next packet descriptor address 76 is used to point to the next packet descriptor in ring 77 (see Figure 5). In the illustrated embodiment, packet descriptors 46A through 46N form a ring in which each points to the next, and wherein the last packet descriptor 46N points to the first or beginning packet descriptor 46A. It should also be noted that the packet descriptors are capable of pointing to any packet descriptor not merely the next adjacent packet descriptor in memory. Further, the ring could consist of but a single packet descriptor in which its next packet descriptor address points to its own address. The frame number field 78 indicates in which frame the packet was received. The frame position field 80 indicates the position in the frame of the start of the packet preamble. The miscellaneous control data field 82 can be utilized to store desirable data associated with the packet descriptor level to accommodate specific implementations.

Figure 9 illustrates the fields of a buffer descriptor which constitutes a sub-packet-level address. The buffer address field 84 contains the address of the first byte in the buffer pointed to by the buffer descriptor. In the illustrated example, buffer descriptor 48A would contain a buffer address pointing to the first byte contained in buffer 52A. The next write buffer descriptor address field 86 is used to point to the next buffer descriptor to be used for writing a packet. Similarly, the next read buffer descriptor address field 88 is used to point to the next buffer descriptor to be used for reading a packet. The amount of data field 90 indicates the amount of the buffer that has been used. The buffer sized field 92 indicates the absolute size of the buffer. The miscellaneous control data field 94 may contain useful data associated with the the buffer descriptor level for a particular implementation. For example, the miscellaneous data field 94 may contain a flag which indicates the end of a packet.

The central processor is responsible for managing the virtual circuit registers, queue control blocks, packet descriptors, buffer descriptors and buffers. It will be apparent to those skilled in the art that there are many methods by which the central processor can manage the fields and memory associated with this organizational hierarchy for receiving, storing and retransmitting a packet. For example, the queue control block could be used to point to a fixed set of packet descriptors which in turn point to a fixed set of buffer descriptors. To add or delete packets from a queue, the write buffer descriptor address 72 (if packets are being received) or the read buffer descriptor address 74 (if packets are being transmitted) could be changed.

In another method, each packet could have a dedicated set of buffer descriptors which in turn has a dedicated packet descriptor. To add or delete packets from a queue, packet descriptors could be added or deleted from a packet descriptor ring by changing the next packet descriptor address 76 to point to packet descriptors in a desired sequence. These methods are illustrative only and indicate the great degree of flexibility with which the designer can control packet transmission in accordance with the method of the present invention.

Some of the further advantages of the method according to this invention are discussed as follows. Although the virtual circuit registers must each point to only one queue control block, a plurality of virtual circuit registers can point to the same queue control block. This may be desirable where a plurality of packets which are identical or contain substantial similarities are encountered. Differences between the packets could be stored in different buffers and the common contents of the packets stored in a common set of buffers. The CP could change the next read buffer descriptor addresses 88 accordingly to point to the proper sequence of buffers for the slightly different packets.

The read and write addresses in the queue control block allows the same virtual circuit register to be able to receive and transmit a packet. This conserves the number of virtual circuit registers required and minimizes repetitive data transfer between receive and transmit cycles.

Each packet descriptor defines a particular packet. An important aspect of the packet descriptors is the ability to point to a next packet descriptor via address 76 to form a circular ring of packet descriptors which point respectively to multiple packets. The size of the ring, i.e. the number of packets which can be consecutively identified, is limited only by the ultimate memory capacity available in the control memory 32 and data memory 34. Since everything below the packet descriptor level is relevant to only one packet, the CP does not have to move redundant data in order to be able to retransmit the packet. This provides a substantial advantage especially when utilized in a packet repeater in which many if not all of the received packets must be retransmitted.

The buffer descriptors permit a plurality of fixed size buffers to be economically utilized. Since a plurality of buffers can be linked by means of the buffer descriptors, this permits common or repetitive information or control data to be stored in selected buffers and incorporated when needed by addressing the associated buffer descriptor and changing its next (write or read) buffer descriptor address as required. For example, a commonly used packet preamble consisting of synchronization data could be stored in one buffer and that buffer addressed by several buffer descriptors thereby providing multiple access to common data. This also provides the advantage of permanently storing certain information in buffers and allowing reuse of that information by directly reading it from the buffer at the appropriate sequence in later generated packets.

Although an embodiment of the present invention has been described and shown in the drawings, the scope of the invention is defined in the claims which follow.

## Claims

1. A packet communication method, for use in an information system in which data is communicated using packets having control data and message data, comprising:
storing said message data in a first memory (34) and said control data in at least a second memory (32);
using a hierarchical addressing protocol to define each packet, said protocol including packet level block addressing for each packet such that at least said message data for a received packet is stored at a selected memory location in said first memory and transmitted using only the message data stored at said selected memory location in said first memory.

2. The method according to claim 1 wherein said protocol is further characterized by linking certain of said packet level block addresses (46A-46N) to form a series of packet addresses which point respectively to a corresponding series of packets (52A-52C, 54A-54C).

3. The method according to claim 2 wherein the last (46N) of said certain packet level block addresses is also linked to the first (46A) of said certain packet level block addresses to form a ring.

4. The method according to claim 1 wherein said packet level block addressing is characterized by selecting a first selectable address (72) during reception of a packet and selecting a second selectable address (74) during packet transmission.

5. The method according to claim 1 wherein said protocol is further characterized by using a sub-packet-level block address (84) to select at least a portion of said message data of each packet.

6. The method according to claim 5 wherein said sub-packet-level addressing is characterized by selecting a first selectable sub-packet-level address (86) during reception of a packet and selecting a second selectable address (88) during transmission of a packet.

7. The method according to claim 1 further characterized by using a super-packet-level block address (44) for addressing packet level block addresses.

8. The method according to claim 7 wherein said super-packet-level block addressing is characterized by selecting a first selectable super-packet-level address (68) during reception of a packet and selecting a second selectable super-packet-level address (70) during transmission of a packet.

9. The method according to claim 2 further characterized by changing the linking of said certain of said packet level block addresses prior to transmission of a series of packets so that a transmitted packet sequence different from said receive packet sequence can be defined without duplication of packet message data.

10. The method according to claim 5 further characterized by storing predetermined portions of message data that are frequently used in predetermined locations in said data memory (34), said sub-packet-level block addresses (84) addressing each of said predetermined locations, whereby repetitive packet information can be utilized without requiring replication of such data.

## Patentansprüche

1. Ein Verfahren zur Paketvermittlung zum Einsatz in einem Informationssystem, in dem Daten unter Verwendung von Paketen kommuniziert werden, die Steuerdaten und Meldungsdaten haben, das aufweist:
Speicherung der Meldungsdaten in einem ersten Speicher (34) und der Steuerdaten in wenigstens einem zweiten Speicher (32);
Verwendung eines hierarchischen Adressierungsprotokolls zur Festlegung jedes Pakets und das Protokoll für jedes Paket eine Paketschicht-Blockadressierung enthält, so dass wenigstens die Meldungsdaten eines empfangenen Pakets in einem ausgewählten Speicherplatz in dem ersten Speicher gespeichert werden und es nur unter Verwendung der Meldungsdaten übertragen wird, die im ausgewählten Speicherplatz des ersten Speichers gespeichert sind.

2. Das Verfahren gemäß Patentanspruch 1, wobei das Protokoll weiter durch Verknüpfung bestimmter der Paketschicht-Blockadressen (46A - 46N) gekennzeichnet ist, um eine Reihe von Paketadressen zu bilden, die auf eine entsprechende Reihe von Paketen (52A - 52C, 54A - 54C) zeigen.

3. Das Verfahren gemäß Patentanspruch 2, wobei die letzte (46N) der bestimmten Paketschicht-Blockadressen auch mit der ersten (46A) der bestimmten Paketschicht-Blockadressen verknüpft ist, um einen Ring zu bilden.

4. Das Verfahren gemäß Patentanspruch 1, wobei die Paketschicht-Blockadressierung durch Auswahl einer ersten wählbaren Adresse (72) während des Empfangs eines Pakets und Auswahl einer zweiten wählbaren Adresse (74) während der Übertragung des Pakets gekennzeichnet ist.

5. Das Verfahren gemäß Patentanspruch 1, wobei das Protokoll weiter durch Verwendung einer Sub-Paketschicht-Blockadresse (84) zur Auswahl wenigstens eines Teils der Meldungsdaten eines jeden Pakets gekennzeichnet ist.

6. Das Verfahren gemäß Patentanspruch 5, wobei die Sub-Paketschichtadressierung durch Auswahl einer ersten wählbaren Sub-Paketschichtadresse (86) während des Empfangs eines Pakets und Auswahl einer zweiten wählbaren Adresse (88) während der Übertragung eines Pakets gekennzeichnet ist.

7. Das Verfahren gemäß Patentanspruch 1, weiter gekennzeichnet durch Verwendung einer Ultra-Paketblockadresse (44) zur Adressierung von Paketschicht-Blockadressen.

8. Das Verfahren gemäß Patentanspruch 7, wobei die Ultra-Paketschicht-Blockadressierung durch Auswahl einer ersten wählbaren Ultra-Paketschichtadresse (68) während des Empfangs eines Pakets und Auswahl einer wählbaren zweiten Ultra-Paketschichtadresse (70) während der Übertragung eines Pakets gekennzeichnet ist.

9. Das Verfahren gemäß Patentanspruch 2, weiter gekennzeichnet durch Veränderung der Verknüpfung bestimmter Paketschicht-Blockadressen vor der Übertragung einer Reihe von Paketen, so dass die Übertragung einer von der empfangenen Paketsequenz verschiedenen Paket sequenz ohne Verdopplung der Paketmeldungsdaten festgelegt werden kann.

10. Das Verfahren gemäß Patentanspruch 5, weiter gekennzeichnet durch Speicherung vorherbestimmter Bereiche der Meldungsdaten, die häufig in vorherbestimmten Plätzen im Datenspeicher (34) verwendet werden, und die Sub-Paketschicht-Blockadresse (84) jeden der vorherbestimmten Plätze adressiert, wodurch sich wiederholende Paketinformationen ohne die Notwendigkeit des Kopierens solcher Daten verwertet werden können.

## Revendications

1. Procédé de communication de paquet pouvant être utilisé dans un système d'information dans lequel des données sont communiquées en utilisant des paquets ayant des données de commande et des données de message, comprenant les étapes consistant à :
stocker lesdites données de message dans une première mémoire (34) et lesdites données de commande dans au moins une deuxième mémoire (32) ;
utiliser un protocole d'adressage hiérarchique pour définir chaque paquet, ledit protocole comportant un bloc de niveau de paquet adressant chaque paquet de telle sorte qu'au moins lesdites données de message pour un paquet reçu sont stockées dans un emplacement de mémoire choisi dans ladite première mémoire et transmis uniquement en utilisant les données de message stockées dans ledit emplacement de mémoire choisi dans ladite première mémoire.

2. Procédé selon la revendication 1, dans lequel ledit protocole est en outre caractérisé par le fait de lier certaines desdites adresses de bloc de niveau de paquet (46A à 46N) pour former une série d'adresses de paquets qui permettent de passer respectivement à une série de paquets correspondante (52A-52C, 54A-54C).

3. Procédé selon la revendication 2, dans lequel les dernières desdites certaines adresses de bloc de niveau de paquet sont également liées à la première (46A) desdites certaines adresses de bloc de niveau de paquet pour former un anneau.

4. Procédé selon la revendication 1, dans lequel ledit adressage de bloc de niveau de paquet est caractérisé par le choix d'une première adresse pouvant être choisie (72) au cours de la réception d'un paquet et par le choix d'une deuxième adresse pouvant être choisie (74) pendant la transmission du paquet.

5. Procédé selon la revendication 1, dans lequel ledit protocole est en outre caractérisé par l'utilisation d'une adresse de bloc de sous-niveau de paquet (84) pour choisir au moins une partie desdites données de message de chaque paquet.

6. Procédé selon la revendication 5, dans lequel ledit adressage de sous-niveau de paquet est caractérisé par le choix d'une première adresse de sous-niveau de paquet pouvant être choisie (86) au cours de la réception d'un paquet et par le choix d'une deuxième adresse pouvant être choisie (88) pendant la transmission d'un paquet.

7. Procédé selon la revendication 1, caractérisé en outre par l'utilisation d'une adresse de bloc de super-niveau de paquet (44) pour adresser les adresses de bloc de niveau de paquet.

8. Procédé selon la revendication 7, dans lequel ledit adressage de bloc de super-niveau de paquet est caractérisé par le choix d'une première adresse de super-niveau de paquet pouvant être choisie (68) au cours de la réception d'un paquet et par le choix d'une deuxième adresse de super-niveau de paquet pouvant être choisie (70) au cours de la transmission d'un paquet.

9. Procédé selon la revendication 2, caractérisé en outre par la modification de la liaison de ladite certaine desdites adresses de bloc de niveau de paquet avant la transmission d'une série de paquets de sorte qu'une séquence de paquets transmise différente de ladite séquence de paquets de réception peut être définie sans que soit nécessaire la duplication des données de message de paquet.

10. Procédé selon la revendication 5, caractérisé en outre par le stockage de parties prédéterminées de données de message fréquemment utilisées dans des emplacements prédéterminés de ladite mémoire de données (34), lesdites adresses de bloc de sous-niveau de paquet (84) adressant chacun desdits emplacements prédéterminés, grâce à quoi les informations de paquet répétitives peuvent être utilisées sans que soit nécessaire la duplication de ces données.
